Europäisches Patentamt

European Patent Office

Office européen des brevets

(11) Publication number: **0 040 864**
**B1**

(12) **EUROPEAN PATENT SPECIFICATION**

(45) Date of publication of patent specification: **28.05.86**

(51) Int. Cl.⁴: **F 16 H 3/08**

(21) Application number: **81105647.2**

(22) Date of filing: **03.03.79**

(80) Publication number of the earlier application in accordance with Art. 76 EPC: **0 004 045**

(54) **Power shift transmission.**

(30) Priority: **06.03.78 US 884078**

(43) Date of publication of application:
**02.12.81 Bulletin 81/48**

(45) Publication of the grant of the patent:
**28.05.86 Bulletin 86/22**

(84) Designated Contracting States:
**DE FR GB IT NL SE**

(56) References cited:
**DE-A-2 451 739**
**DE-B-1 052 768**
**DE-C- 935 047**
**FR-A-1 108 127**
**FR-A-1 401 383**
**FR-E- 88 466**
**GB-A- 955 907**
**US-A-2 519 279**
**US-A-2 739 487**
**US-A-2 772 581**
**US-A-2 787 167**
**US-A-3 001 413**
**US-A-3 377 876**
**US-A-3 442 155**
**US-A-3 541 885**

(73) Proprietor: **EATON CORPORATION**
**100 Erieview Plaza**
**Cleveland Ohio 44114 (US)**

(72) Inventor: **Morscheck, Timothy John**
**18221 Rainbow Dr.**
**Lathrup Village Michigan (US)**

(74) Representative: **Patentanwälte Dipl.-Ing.**
**W. Scherrmann Dr.-Ing. R. Rüger**
**Webergasse 3 Postfach 348**
**D-7300 Esslingen (Neckar) (DE)**

Courier Press, Leamington Spa, England.

## Description

This invention relates to a transmission adapted for powershifting and, in particular, for use in land vehicles.

It is known in the prior art to provide multiple ratio, plural powerpath transmissions wherein the powerpaths are alternately connected between the transmission input and output shafts to upshift and downshift the transmission. In many of such transmissions, each powerpath includes a countershaft with multiple ratio gears rotatably mounted thereon. While powerflow between the input and output shafts is through one powerpath, the next upshift or downshift ratio gear in a nondriving powerpath is connected to its associated countershaft. The shift is then completed by swapping the powerpaths.

A powershift transmission of this type and in accordance with the preamble of Claim 1 is shown in DE—A—2 452 739. This transmission is provided with two multiple ratio powerpaths which are alternately powershifted between an input shaft and an output shaft. Each powerpath includes a countershaft and multiple ratio gears mounted thereon. The ratio gears are in constant relation with the input shaft, are connected to their associated countershaft via jaw clutches, and are connected to the output shaft via powershift friction clutches. The jaw clutches are engaged and disengaged while the associated powershift clutch is disengaged.

If the transmission disclosed in DE—A—2 452 739 were modified to include a torque converter disposed between a source of power and the input shaft, the sole source of power to all of the ratio gears in the transmission would be through the torque converter which is rather inefficient and not needed in the higher speed ratios of the transmission. To negate this inefficiency, torque converter bypass or lockup clutches have been used. Such clutches have several disadvantages, e.g., they and their needed control systems increase the cost and complexity of the transmission.

The same is true of a powershift transmission as it is known from DE—C—935 047. This transmission is provided with two multiple ratio power paths which are alternately connected between a main drive input, e.g. an engine, and an output shaft via two medial input shafts. Each of the power paths includes synchronizing means and means operative subsequent to the synchronizing for positively clutching the synchronized elements. Furthermore, friction clutch means in the form of a double-acting friction clutch are provided, which are disposed between the constantly driven main drive input and the two input shafts for selectively and alternately connecting the first or the second input shaft to the main drive input, while the other input shaft is idling. These friction clutch means can be substituted by two fluid couplings or two hydraulic torque converters which are located in the same place of the two power paths and which are alternately activated. When using the modified embodiment with the torque converters, again the sole source of power to all of the ratio gears in the transmission will be through one of these torque converters, with all the inherent disadvantages, as mentioned above.

It is therefore an object of the invention to provide a transmission suited for use in combination with a torque converter and which is low in initial cost and economical in use while, at the same time, being readily shifted without a break in power between the transmission input and output shafts. This object is attained by the invention as it is characterized in the claims.

It is an advantage of the invention that two input shafts are provided. One input shaft is adapted to be driven by a torque converter, and the other is adapted to be driven directly by the engine. Each input shaft drives at least one ratio gear in each powerpath. This arrangement becomes very significant when one wishes to provide a transmission embodying the starting and low-speed ratio shifting advantages inherent with a torque converter while, at the same time, avoiding inherent inefficiencies of the torque converter in high speed ratios.

Brief Description of the Drawings

The preferred embodiment of the invention is shown in the accompanying drawings in which:

FIGURE 1 is a schematic view of the transmission, looking in the direction of arrows 1—1 of FIGURE 2;

FIGURE 2 is a schematic view of the transmission, looking in the direction of arrows 2—2 of FIGURE 1;

FIGURE 3 is a detailed view of the transmission of FIGURE 1, looking in the direction of arrows 1—1 of FIGURE 2;

FIGURE 4 is a detailed view of a portion of the transmission, looking in the direction of arrows 3—3 of FIGURE 2; and

FIGURE 5 is a schematic view of a portion of a countershaft assembly of FIGURES 1 and 3.

Certain terminology referring to direction and motion will be used in the following description. The terminology is for convenience in describing the preferred embodiment and should not be considered limiting unless explicitly used in the claims.

Detailed Description of the Preferred Embodiment

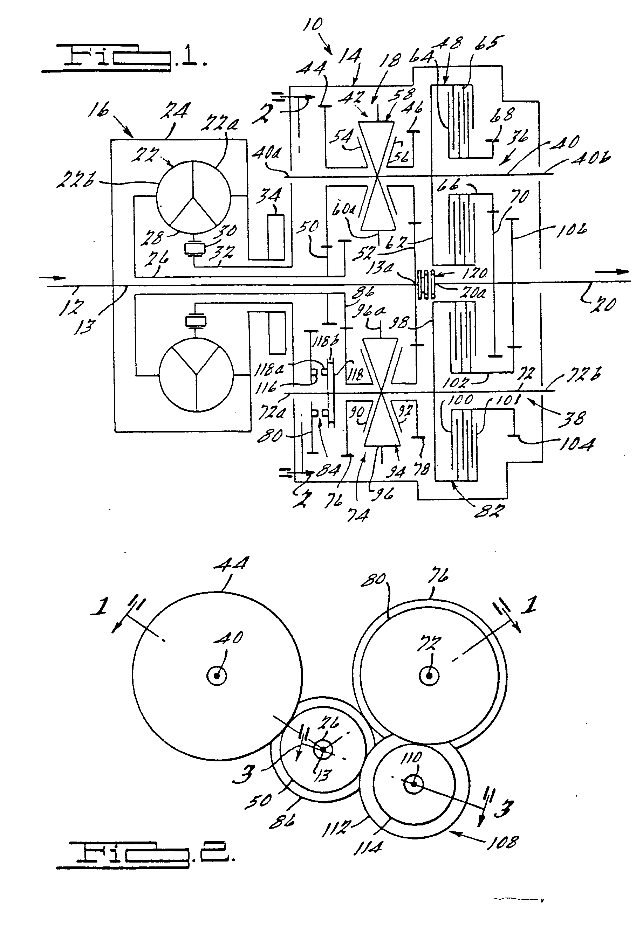

Looking first at FIGURE 1, therein is schematically illustrated a power shift transmission assembly 10 adapted for use in an unshown land vehicle, but not limited to such use. Transmission 10 is preferably automatically shifted by an unshown control system, which control system forms no part of the instant invention. Transmission 10 includes an input shaft 12 which may be directly driven by an unshown internal combustion engine, a housing assembly 14, a torque converter assembly 16, a ratio change gear assembly 18 which is driven by input shaft 12 through torque converter assembly 16 in first, second, and reverse ratios and is driven directly by a bypass input shaft 13 in third and fourth ratios, and an output shaft 20 axially aligned with input shafts 12 and 13.

The torque converter assembly 16 is conventional in that it includes a fluid coupling of the torque converter type having an impeller 22a driven by input shaft 12 through a shroud 24, a turbine 22b hydraulically driven by the impeller and in turn driving a sleeve shaft 26 which extends into gear assembly 18, and a runner or stator 28 which becomes grounded to housing 14 via a one-way roller clutch 30 carried by a sleeve shaft 32 fixed to housing assembly 14. Shroud 24 also drives a pump 34 for pressurizing the torque converter, for lubricating the transmission, and for selectively pressurizing friction clutches in gear assembly 18.

Sleeve 26 provides a fluid power or torque converter driven shaft for first, second, and reverse ratio gears in gear assembly 18. Bypass shaft 13 is in continuous direct drive with input shaft 12 and provides a torque converter bypass for driving third and fourth ratio gears; this arrangement of the bypass shaft negates the need of a separate torque converter bypass clutch.

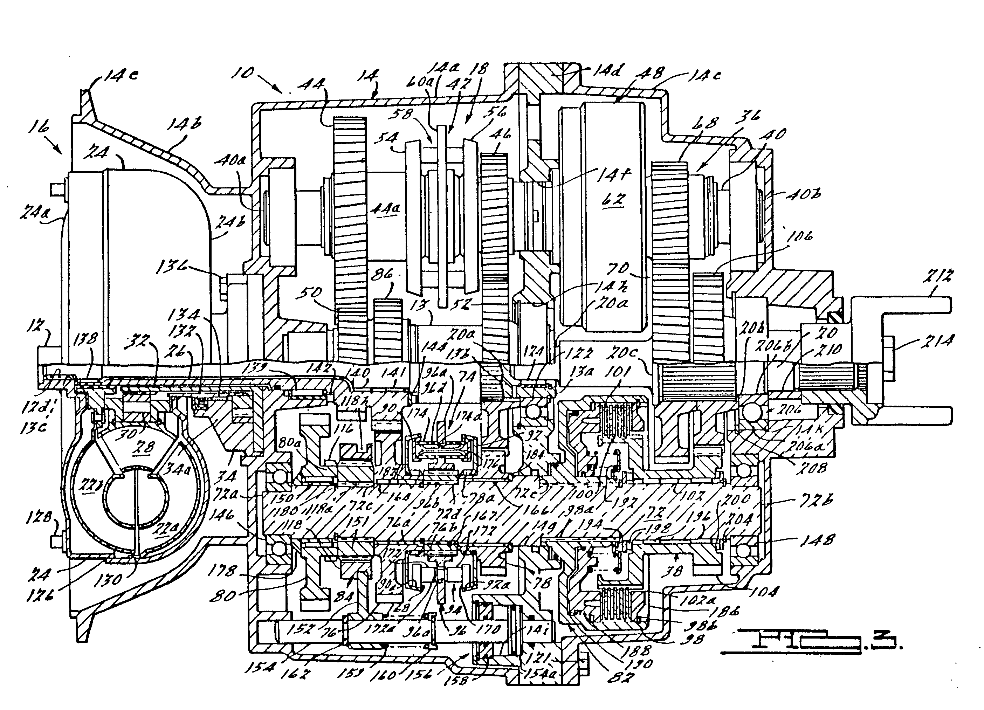

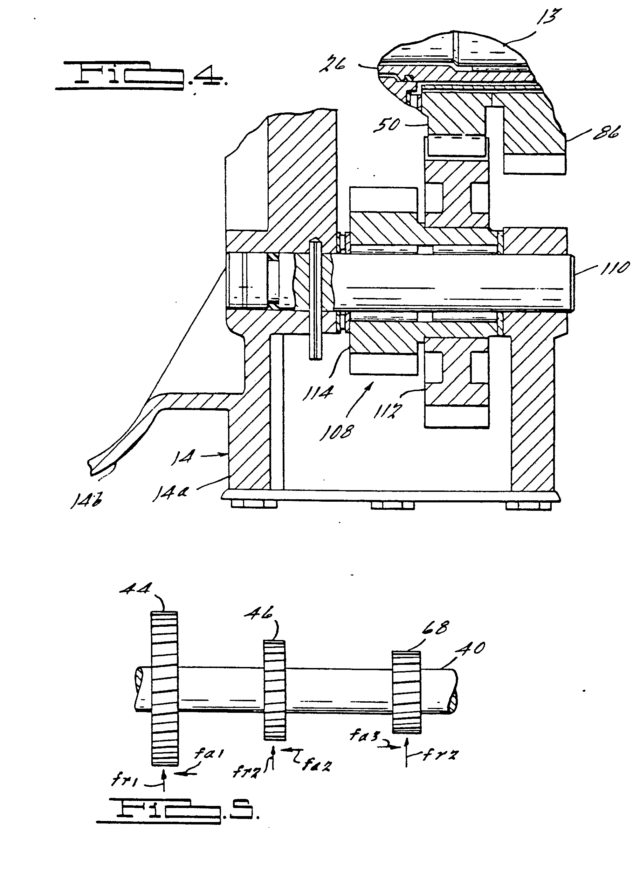

Looking now at FIGURES 1 and 2, the schematically illustrated ratio change gear assembly includes two countershaft assemblies 36 and 38, which are disposed about axes which are parallel to and radially outward of an axis defined by shafts 12, 13, and 20. Assembly 36 includes a shaft 40 rotatably supported at its ends 40a and 40b by housing assembly 14, a double acting synchronizer clutch 42, first and third speed ratio gears 44 and 46 rotatable relative to and supported by shaft 40, and a hydraulically actuated friction clutch 48. First speed ratio gear 44 is driven by and in continuous mesh with an input drive gear 50 which is non-rotatably secured to bypass shaft 13. Synchronizer clutch 42 may be a conventional double acting synchronizer having a clutch member 54 at one end which is non-rotatably secured to gear 44, a clutch member 56 at the other end which is non-rotatably secured to gear 46, and a center clutch member 58 at the center which is non-rotatably secured to shaft 40. Center clutch member 58 may be slidably shifted leftwardly or rightwardly in a conventional manner to, respectively, couple gear 44 or 46 to shaft 40. Such slidable shifting of the center clutch member first frictionally couples countershaft 40 with one of the ratio gears and after synchronism is reached, then positively clutches the shaft with the gear via a jaw clutch shown in FIGURE 3. Center clutch member 58 includes a radially extending flange portion 60a which may be gripped by an unshown shift fork to effect the leftward and rightward shifting in a conventional manner. Friction clutch 48 includes a housing member 62 non-rotatably secured to shaft 40, two sets of interdigitated disks 64 and 65, and a sleeve shaft 66 rotatably supported by shaft 40. Disks 64 are non-rotatably secured to sleeve shaft 66 and disks 65 are non-rotatably secured to housing member 62. Both disk sets are axially moveable in housing 62 and are frictionally interconnected in response to hydraulic pressure being selectively applied to an unshown piston in the housing member 62. Sleeve shaft 66 is non-rotatably secured to a drive gear 68 which is rotatably supported by shaft 40. Drive gear 68 is in continuous mesh with an output gear 70 which is non-rotatably secured to output shaft 20.

Countershaft assembly 38 differs from assembly 36 mainly in that it also includes a reverse ratio gear. Assembly 38 includes a shaft 72 rotatably supported at its ends 72a and 72b by housing assembly 14, a double acting synchronizer clutch 74, second, fourth and reverse speed ratio gears 76, 78, 80 which are rotatably relative to and supported by shaft 72, a hydraulically actuated friction clutch 82, and a positive type jaw clutch assembly 84. Clutch 84 may be a synchronized clutch similar to clutches 42 and 74. Second speed ratio gear 76 is driven by and in continuous mesh with an input drive gear 86 which is non-rotatably secured to torque converter driven shaft 26. Fourth speed ratio gear 78 is driven by and in continuous mesh with input drive gear 52 which is non-rotatably secured to bypass shaft 13. Synchronizer clutch 74 is a double acting clutch and may be identical to synchronizer 42. Synchronizer clutch 74 includes a clutch member 90 at one end which is non-rotatably secured to gear 76, a clutch member 92 at the other end which is non-rotatably secured to gear 78, and a center clutch member 94 at the center which is non-rotatably secured to shaft 72. Center clutch member 94 includes a radially extending flange portion 96a which may be gripped by an unshown shift fork to effect leftward and rightward shifts in the same manner as described for synchronizer 42. Friction clutch 82 may be identical to friction clutch 48. Friction clutch 82 includes a housing member 98 which is non-rotatably secured to shaft 72, two sets of disks 100 and 101, and a sleeve shaft 102 rotatably supported by shaft 72. Disks 100 are non-rotatably secured to sleeve shaft 102 and disks 101 are non-rotatably secured to housing member 98. Both disk sets are axially moveable in housing 98 and are frictionally interconnected in response to hydraulic pressure being selectively applied to an unshown piston in housing member 98. Sleeve shaft 102 is non-rotatably secured to a drive gear 104 which is rotatably supported by shaft 72. Drive gear 104 is in continuous mesh with an output gear 106 which is non-rotatably secured to output shaft 20.

Reverse gear 80 is rotatably supported by shaft 72 and is driven by an idler gear assembly 108, seen only in FIGURES 2 and 4. Idler gear assembly 108 includes a shaft 110 which is non-rotatably supported by housing assembly 14, a gear 112 which is rotatably supported on shaft 110 and in continuous mesh with input drive gear 50 which is driven by torque converter driven shaft 26, and a gear 114 which is rotatably supported on shaft 110 and non-rotatably secured to gear 112. Gear 114 is in continuous mesh with reverse gear 80. Jaw clutch assembly 84 includes jaw clutch teeth 116 which are non-rotatably secured to gear 80 and a jaw clutch member 118 mounted for sliding movement relative to shaft 72 and secured against rotation relative to shaft 72. Member 118 includes jaw clutch teeth 118a which engage with teeth 116 and an annular groove 118b which receives a shift fork 152 engaging the clutch in a conventional manner. Shift fork 152 is shown in FIGURE 3.

By way of example, the ratios of ratio change gear assembly 18 are: first gear — 4.05, second gear — 2.22, third gear — 1.42, fourth gear — 1.00, and reverse gear — 4.76. As may be seen, bypass shaft 13 and output 20 rotate at the same speeds when drive is through fourth gear.

Gear assembly 18 may also be provided with a direct drive clutch 120 at the confronting ends 13a and 20a and the bypass of output shafts 13 and 20 for bypassing fourth speed ratio drive through countershaft 38. Such a clutch may be a non-synchronized positive type jaw clutch as illustrated herein, since herein shafts 13 and 20 rotate at the same speeds in the fourth speed drive ratio. Further, the direct drive of clutch 120 could be used to provide a fifth speed ratio by decreasing the ratio spacing of first, second, third, and fourth ratio gears so that output shaft 20 would rotate slower than bypass shaft 13 when driving in fourth speed. When using clutch 120 to provide a fifth speed ratio, the clutch is preferably a fluid actuated friction clutch or a synchronized jaw clutch, both of which may be of a conventional type.

Looking now at FIGURES 1 and 4, therein the transmission of FIGURES 1 and 2 is disclosed in greater detail to show additional features not readily shown in a schematic. The transmission of FIGURES 3 and 4 does not include the direct drive clutch 120 but is otherwise the same as that previously described. Thus, in FIGURES 3 and 4 the numerals corresponding to those of FIGURES 1 and 2 will refer to parts already described.

In FIGURE 3, housing assembly 14 includes a front member 14a having a bell housing portion 14b formed integral therewith, a rear housing member 14c, and an intermediate plate member 14d. Members 14a, 14c, and 14d are secured together by a plurality of bolts 121, one of which is shown. A flange portion 14e of the bell housing provides means for securing the transmission to the rear of an engine housing. Intermediate plate 14d includes through bores 14f and 14g for the passage of shafts 40 and 72, a bore 14h having a bearing 122 disposed therein for rotatably supporting end 13a of shaft 13. End 20a of shaft 20 extends into a blind bore 13b in shaft 13 and is supported therein by a roller bearing 124. Intermediate plate 14d also includes several unshown oil passages for directing lubricating oil to various portions of the transmission and for directing oil to actuate clutches 48 and 82.

Shroud 24 of torque converter 16 includes a front portion 24a and a rear portion 24b which are non-rotatably secured together at 126. Front portion 24a is integrally formed with a cup shaped portion defining shaft 12 and having internal splines 12a which receive splines 13c for driving shaft 13. Front portion 24a also includes a purality of studs 128 for securing the transmission input to an unshown crankshaft or output shaft of an engine or motor. The rear portion 24a is fixed to impeller 22a at 130 and is welded to a sleeve 132. Sleeve 132 rotatably supports the rear portion 24a via a bearing 134 and drives pump 34. Pump 34 may be a well known crescent gear pump. Bearing 134 is supported by pump housing 34a which is bolted to housing portion 14a via a plurality of bolts 136. Shafts 13 and 26 are rotatably supported relative to each other and housing assembly 14 via roller bearings 138, 139, 140, 141, and, as previously mentioned, by bearing 122. Shafts 13 and 26 are axially retained relative to housing asembly 14 and each other by a ball bearing 122 and roller bearings 142 and 144.

Looking now at cross-sectioned countershaft 38, ends 72a and 72b of shaft 72 are supported by ball bearings 146 and 148 which also axially retain the shaft. Reverse gear 80 is rotatably supported on shaft 72 by a roller bearing 150 and includes an axially extending portion 80a having external splines defining jaw clutch teeth 116 of the jaw clutch assembly 84. Clutch assembly 84 further includes a ring member 151 splined on its I.D. to shaft 72 and splined on its O.D. to jaw clutch teeth 118a of member 118. Annular groove 118b in member 118 receives a shift fork 152 which is slidably connected to a shift rod 154 of an actuator 156. Actuator 156 includes a piston portion 154a formed on or fixed to rod 154 and disposed in a cylinder 141 cast into intermediate plate 14d, and an end plate 158 for closing the cylinder. A spring 159 disposed between a snap ring assembly 160 and shift fork 152 resiliently urges clutch teeth 118a into engagement with clutch teeth 116 in response to leftward movement of rod 154 and piston 154a. A snap ring 162 contacts the shift fork for disengaging the jaw clutch in response to rightward movement of the rod and piston. Cylinder 14i is provided with oil on both sides of piston 154a by unshown passages in intermediate plate 14d. Hydraulic sealing of the piston and cylinder is provided by O-ring seals in a conventional manner. Hydraulic actuators for shifting synchronizers 42 and 74 are provided in a similar manner.

Gear 76 includes an axially extending sleeve portion 76a having external jaw clutch splines 76b which receive internal splines of clutch member 90. Gear 76 and sleeve portion 76a are rotatably supported on shaft 72 by a pair of roller bearings 164. In a like manner, gear 44 of countershaft assembly 36 includes an actually extending portion 44a, but of longer length, splined to clutch member 54 and unshown roller bearings for rotatably supporting the gear and sleeve portion on shaft 40. In a similar manner, gear 78 is rotatably supported on shaft 72 by a roller bearing 166 and includes an axially extending portion having external clutch splines 78a which receive internal splines of clutch member 92. Gear 46 is rotatably mounted on shaft 40 and connected to clutch member 56 in the same manner.

Double acting synchronizer 74, of which members 90 and 92 are part, is well known in the prior art. The synchronizer and in particular center clutch 94 includes a sleeve 167 splined on its I.D. to shaft 72 and on its O.D. to internal jaw clutch splines 96b of a slidable positive type jaw clutch member 96 integrally formed with flange portion 96a, a pair of friction cone rings 168 and 170 rigidly secured together by three circumferentially positioned pins 172, and a pair of internal friction cone surfaces 90a and 92a which are engageable with external cone surfaces defined by rings 168 and 170. Pins 172, which extend through three chamfered openings 96c circumferentially positioned in flange 96a, have at their centers (the position of the flange in its neutral position) an annular groove 172a having chamfered ends. The I.D. of each chamfered opening 96c is slightly greater than the major O.D. of each pin 172. Annular grooves 172a are slightly wider than the flange. Center clutch member 94 further includes three axially split pins 174 extending through three chamfered openings 96d which are alternately spaced between openings 96c. Pins 174 each consist of a pair of semicylindrical halves which are biased apart by a leaf spring 176. Each pair of semicylindrical halves define an annular groove 174a having chamfered ends. Annular groove 174a is formed by a semicircular groove defined by each pin half. Spring 176 biases the semiannular grooves outward into engagement with openings 96d. The I.D. of openings 96d is slightly greater than the major O.D. of pins 174. Annular grooves 174a closely fit the width of flange 96a.

The center clutch member 94 is shown in the neutral position, therefor both gears 76 and 78 are disengaged, the friction cone surfaces are slightly spaced apart, pins 172 and 174 and their respective grooves are concentric with openings 96c and 96d, and the semiannular grooves defining grooves 174a are biased into engagement with holes 96d. When it is desired to couple gear 76 to shaft 72, flange portion 96a is moved axially to the left by an appropriate shift mechanism. Such movement, which is transmitted through split pins 174, shifts the cone surface of cone ring 168 into contact with cone surface 90a. This contact (provided gear 76 and flange 96a are not synchronous with each other) causes pins 172 to move out of concentric alignment with openings 96c, whereby the chamfers of the openings 96c and the chamfers of the grooves 172a engage and prevent further axial movement of the flange due to torque at the interface of the chamfers. As synchronous speeds are reached, the torque at the interface of the chamfers diminishes and the axial force on the flange 96a moves pins 172 back into a concentric relationship with openings 96c, thereby allowing flange 96a and jaw member 96 to move axially to the left for engaging jaw clutch splines 96b with jaw clutch splines 76b. Gear 76 is coupled to shaft 72 in the same manner by moving the flange rightward.

The transmission gears are preferably helical gears and as such they are axially loaded with substantial forces when they are transmitting torque. Further, since the gears are in continuous mesh, they rotate at different speeds. Hence, it is preferred that the gears be axially isolated from each other to prevent the transmittal of the axial forces across surfaces rotating at different speeds to reduce wear and energy losses. Isolation and actual retention of gears 80, 76, and 78 is as follows:

Gear 80 is retained against axial movement relative to shaft 72 in the leftward direction by a thrust plate 178 and in the rightward direction through ring member 151 by a shoulder 72c defined by a step in shaft 72. Shoulder 72c prevents axial loading being imposed on gear 76 when gear 80 is engaged. Gear 76 is retained against axial movement relative to shaft 72 in the leftward direction through ring member 151 by a snap ring 180 and in the rightward direction through ring member 167 which abuts a shoulder 72d defined by a step in shaft 72. Gear 78 is retained against axial movement relative to shaft 72 in the leftward direction through ring member 167 by a snap ring 182 and in the rightward direction by a thrust plate 184.

Friction clutch 82, which is structurally and functionally conventional and identical to clutch 48, includes the housing member 98 splined to shaft 72 at 98a, the set of disks 101 which are slidably splined to internal splines 98b defined by the housing member, the set of disks 100 which are slidably splined to external splines 102a defined by an extension of sleeve 102, a reaction member 186 which is non-rotatably secured to housing member 98 by splines 98b, a piston 188 for squeezing the disks together in response to pressurized fluid being introduced into a chamber 190 defined by housing member 98 and piston 188, and a return spring 192 for retracting the piston. Housing member 98 is axially retained by a shoulder 72e defined by a step in shaft 72 and a snap ring 194. Sleeve 102 and gear 104 are rotatably supported on shaft 72 by a pair of roller bearings 196 and are axially retained by snap rings 194 and 204 through thrust bearings 198 and 200.

The gear 68 and clutch 48 of countershaft assembly 36 are rotatably and axially retained on shaft 40 in a similar manner.

Output shaft 20 is rotatably supported by the roller bearing 124 and a ball bearing 206. The outer race 206a of ball bearing 206 is supported by housing portion 14c and is axially retained thereto by a shoulder 14k and a snap ring 208. Axial retention of shaft 20 is provided by the inner race 206b of bearing 206 which is sandwiched between a shoulder 20b defined by shaft 20 and a spacer sleeve 210. Sleeve 210 is held in place by an output yoke 212 which is splined to shaft 20 and axially retained by a bolt 214. Output gears 70 and 106 are splined to shaft 20 and are retained in the leftward direction by a flange portion 20c defined by shaft 20 and in the rightward direction by the inner race 206b.

Operation

In reviewing the operation, it will be assumed that the transmission 19 is installed in a land vehicle having an internal combustion engine, that the engine crankshaft is connected to torque converter shroud 24 by studs 128, that the crankshaft rotates the shroud clockwise when viewing the shroud from the front, and that a shift control system will automatically effect shifting to the desired speed ratios in the proper sequence. Such control systems are well known and are often made responsive to parameters such as engine load and vehicle speed. It will also be assumed that the control system includes a shift control lever which is selectively placed in neutral to disengage the transmission, or in drive to effect forward movement of the vehicle, or in reverse to effect the reverse movement of the vehicle. The shift control system referred to herein is by way of example only and does not form part of the invention herein or any preferred form of a control system.

With the shift control lever in neutral and the engine running, by pass shaft 13 and torque converter driven shaft 26 rotate clockwise and rotate input drive gears 50, 86, and 52 clockwise, whereby driven gears 44, 46, 76, 78 rotate counterclockwise and gear 80 rotates clockwise since it is driven through idler gear assembly 108. Further, countershafts 40 and 72 are completely disconnected from the transmission input and output since synchronizers 42 and 74 and fluid actuated clutches 48 and 82 are disengaged while the shift control lever is in neutral.

Assuming now that a vehicle operator places the shift control lever in drive and wishes to accelerate the vehicle in a forward direction to a speed which will cause the control system to sequentially upshift through each of the four forward ratio gears. When the shift lever is placed in drive, the control system connects the torque converter driven shaft to the output shaft through the first speed ratio gear in the following sequence: 1) Synchronizer flange 60a is moved slightly to the left by an appropriate actuator (not shown) to effect a frictional connection of the first gear 44 to shaft 40, whereby shaft 40, which is disconnected from the output shaft, is pulled up toward synchronous speed with gear 44; 2) Flange 60a will then move further to the left and clutch gear 44 to shaft 40 by the jaw clutch in the synchronizer when the synchronous speed is reached; and 3) Clutch 48 is then actuated by pressurized fluid. First gear is now fully engaged.

When engine load decreases and vehicle speed increases to predetermined amounts, the torque converter driven shaft is connected to the output through the second speed ratio gear in the following sequence: 1) Synchronizer flange 96a is moved slightly to the left by an unshown actuator to effect a frictional connection of the second gear 76 to shaft 72, whereby shaft 72, which is disconnected from the output shaft, is pulled up toward synchronous speed with gear 76; 2) Flange 96a will then move further to the left and clutch gear 76 to shaft 72 by the jaw clutch in the synchronizer when the synchronous speed is reached; 3) Clutches 48 and 82 are then deactuated and actuated, respectively, to drivingly disconnect shaft 40 and drivingly connect shaft 72; and 4) Flange 60a is then moved back to its neutral position to disengage the synchronizer. Second gear is now fully engaged and first gear is disengaged. In the foregoing sequence in upshifting to second gear, it should be noted that shaft 72 is synchronized with gear 76 through a drive connection with the transmission input and while drive is through the first gear and shaft 40. Such synchronizing may be characterized as input synchronizing. The other ratio gears and the associated countershafts are synchronized in like manner.

When engine load decreases and vehicle speed increases to a predetermined amount, bypass shaft 13 is then connected to the output shaft through third speed ratio gear 46 in a four step sequence similar to the above sequence for second gear: 1) Flange 60a is moved slightly to the right to frictionally connect gear 46 to shaft 40; 2) When synchronous speed is reached, flange 60a moves further to the right to engage the synchronizer jaw clutch; 3) Clutches 82 and 48 are deactuated and actuated, respectively; and 4) Flange 96a is moved back to neutral. Third gear is now fully engaged and the torque converter is automatically bypassed.

The sequence for upshifting to fourth gear should be obvious from the foregoing and it should suffice to say that synchronizer 74 is actuated to the right, clutches 48 and 82 are deactuated and actuated, respectively, and synchronizer 42 is disengaged.

Downshifting from fourth gear is merely the reverse of the upshift sequence in that the next lower ratio gear is first synchronized with its respective shaft while drive continues in the higher ratio, the drive is then switched from one countershaft assembly to the other by deactuating and actuating the fluid actuated clutches 48 and 82.

Assuming now that the vehicle operator wishes to move the vehicle in the reverse direction, the shift control lever is placed in the reverse position, whereby the control system will connect the torque converter driven shaft to the output shaft through reverse gear 80 and idler assembly 108. The sequence of events to effect drive in reverse may vary; one sequence which may be automatically effected by the control system is as follows: 1) Torque converter driven shaft 26 is pulled down to a low speed by momentarily effecting a driving connection to the output shaft through countershaft assembly 36; this is done by connecting first gear 44 to shaft 40 and momentarily actuating clutch 48 in the manner described for forward drive in first gear; and 2) Clutch member 118, of the clutch assembly 84, is then resiliently moved leftward by actuator 156 to effect interengagement of jaw clutch teeth 118a and 116.

The position of first gear 44 on countershaft 40 and reverse gear 80 on countershaft 72 allows the vehicle operator to power shift between first and reverse. Such power shifting is accomplished by moving the shift control lever between drive and reverse and by programming the control system to momentarily delay or leave reverse clutch 84 engaged and then actuating and deactuating clutches 48 and 82 in accordance with the position of the shift control lever. This facilitates quick reverse to forward power shifting which greatly enhances the operator's ability to rock the vehicle as is often necessary in snow and mud conditions.

Looking now at a feature provided by the arrangement of the helical teeth of the gears in the transmission, it is well known in force analysis of gears having meshed helical teeth that forces acting on the contacting teeth of each gear may be resolved into tangential, radial, and axial components. The tangential force component is useful since it serves to rotate the driven gear. The radial axial force components on the other hand are not normally useful; they merely add to bearing loads and tend to bend the shaft that the gear is mounted on.

Looking now at the schematic illustration of FIGURE 5, therein is shown gears 44, 46, and 68 which are mounted on countershaft 40. These gears are provided with helical teeth which are arrayed with a helical hand such that the bending moments imposed on shaft 40 by axial force components acting on gears 44, 46, and 68 will subtract from bending moments imposed on the shaft by radial force components, thereby reducing the net bending forces on shaft 40 to a level less than would be caused if the gears had the opposite hand. More specifically, gears 44, 46, and 68 rotate counterclockwise when viewed from the left end of shaft 40. Gears 44 and 46 are driven gears and gear 68 is a drive gear. The radial forces $fr_1$, $fr_2$, and $fr_3$, acting on these gears all act in the indicated directions and tend to bend or bow the simply mounted shaft 40 upward. To counter the bending forces of $fr_1$, $fr_2$, and $fr_3$, gears 44, 46, and, 68 each have left hand helical teeth. Since gears 44 and 46 are driven gears, the axial forces $fa_1$ and $fa_2$ on the helical contact teeth of each will act to the left, thereby imposing a clockwise bending moment on their respective gears which tends to bend or bow shaft 40 downward. Since gear 68 is a drive gear, the axial force $fa_3$ will act to the right, thereby imposing a counterclockwise bending moment on gear 68 which tends to bend or bow shaft 40 downward. Hence, it may be seen that the axial forces subtract from the radial forces to decrease the net bending forces acting on shaft 40. It should be kept in mind that at any given time, only one of the gears 44 and 46 are engaged. The magnitude of the axial forces acting on each of the gears 44, 46, and 68 may of course be varied by varying the degree of the helical angle on each gear to balance the forces.

Gears 80, 76, 78, and 104 of countershaft assembly 38 have helical teeth inclined in the same direction as the teeth of countershaft assembly 36 and for the same reasons given for shaft 40 of countershaft assembly 36.

The preferred embodiments of the invention have been disclosed for illustrative purposes.

## Claims

1. A powershift transmission (10) including a first input shaft (26), an output shaft (20), a plurality of countershafts (40, 72), a ratio gear (44, 76, 80) rotatably mounted on each countershaft and in constant driving relation with the first input shaft, jaw clutches (42, 74, 84) for connecting the ratio gears with their respective countershafts, powershift friction clutches (48, 82) for alternately connecting the countershafts with the output shaft, characterized by a second input shaft (13), an additional ratio gear (46, 78) rotatably mounted on each countershaft and in constant driving relation with the second input shaft for providing higher speed ratios than the ratio gears driven by the first input shaft, additional jaw clutches (42, 74) for connecting the additional ratio gears with their respective countershaft, and the first input shaft being driven by a fluid coupling (22) adapted to be driven by an engine and the second input shaft being adapted to be driven directly by the engine, whereby the lower speed ratio gears are driven by the fluid coupling and the higher speed ratio gears are driven by the second input shaft acting as a bypass shaft for the fluid coupling.

2. The powershift transmission of Claim 1, wherein the plural countershafts comprise two countershafts (40, 72) characterized by the ratio gears driven by the first input shaft (26) being reverse (80) and first speed (44) ratio gears.

3. The powershift transmission of Claim 2, characterized by the ratio gears driven by the first input shaft further including a second speed ratio gear (76) common with the countershaft (72) of the reverse speed ratio gear (80), and the ratio gears driven by the second input shaft (13) being third (46) and fourth (78) speed ratio gears respectively common with the countershafts of the first and second speed ratio gears.

4. The powershift transmission of Claim 1 or 2, characterized by each of the jaw clutches being of the synchronizer type.

5. The powershift transmission of Claim 1 or 3, characterized by the drive gear (68, 104) rotatably mounted on each countershaft (40, 72) and in constant driving relation with the output shaft (20), and one of the powershift friction clutches being mounted on each countershaft for connecting the drive gear thereon to the countershaft.

## Patentansprüche

1. Leistungsschaltgetriebe (10) mit einer ersten Eingangswelle (26), einer Ausgangswelle (20), einer Anzahl Vorgelegewellen (40, 72), einem auf jeder Vorgelegewelle drehbar gelagerten und in dauernder Antriebsverbindung mit der ersten Eingangswelle stehenden Stufen-Zahnrad (44, 76, 80), Klauenkupplungen (42, 74, 84) zur Verbindung der Staufen-Zahnräder mit ihrer jeweils entsprechenden Vorgelegewelle, Leistungsreibungskupplungen (48, 82) zur wechselweisen Kupplung der Vorgelegwellen mit der Ausgangswelle, gekennzeichnet durch eine zweite Eingangswelle (13), ein auf jeder Vorgelegewelle drehbar gelagertes und in dauernder Antriebsverbindung mit der zweiten Eingangswelle stehendes zusätzliches Stufen-Zahnrad (46, 78) zur Erzeugung einer Drehzahlübersetzung, die jewils höher ist als die der von der ersten Eingangswelle angetriebenen stufen-Zahnräder, zusätzliche Klauenkupplungen (42, 74) zur Verbindung der zusätzlichen Stufen-Zahnräder mit ihrer jeweiligen Vorgelegewelle, sowie dadurch, daß die erste Eingangswelle von einer von einem Motor antreibbaren Flüssigkeitskupplung (22) und die zweite Eingangswelle unmittelbar von dem Motor antreibbar sind, derart, daß die Stufen-Zahnräder kleinerer Drehzahlübersetzung von der Flüssigkeitskupplung und die Stufen-Zahnräder höher Drehzahlübersetzung von der als Neben- (By-Pass) -Welle für die Flüssigkeitskupplung wirkenden zweiten Eingangswelle angetrieben sind.

2. Leistungsschaltgetriebe nach Anspruch 1, bei dem die mehreren Vorgelegewellen aus zwei Vorgelegewellen (40, 72) bestehen, dadurch gekennzeichnet, daß die von der ersten Eingangswelle (26) angetriebenen Stufen-Zahnräder jeweils das Rückwärtsgang-Zahnrad (80) und das Erster-Gang-Stufen-Zahnrad (44) sind.

3. Leistungsschaltgetriebe nach Anspruch 2, dadurch gekennzeichnet, daß die von der ersten Eingangswelle angetriebenen Stufen-Zahnräder außerdem ein Zweiter-Gangs-Stufen-Zahnrad (76) auf der dem Rückwärtsgang-Zahnrad (80) zugeordneten Vorgelegewelle (72) umfassen und daß die von der zweiten Eingangswelle (13) angetriebenen Stufen-Zahnräder das Dritter- Gang- und das Vierter-Gang-Stufen-Zahnrad (46; 78) sind, die auf der vorgelegewelle des Erster-Gang- bzw. des Zweiter-Gang-Stufen-Zahnrades angeordnet sind.

4. Leistungsschaltgetriebe nach Anspruch 1 oder 2, dadurch gekennzeichnet, daß jede der Klauenkupplungen als Synchronisationskupplung ausgebildet ist.

5. Leistungsschaltgetriebe nach Anspruch 1 oder 3, gekennzeichnet durch ein auf jeder der vorgelegewellen (40, 72) drehbar gelagertes und in dauernder Antriebsverbindung mit der Ausgangswelle (20) stehendes Antriebszahnrad (68, 104), sowie dadurch, daß die Leistungsreibungskupplungen auf den einzelnen Vorgelegewellen zur Verbindung des darauf jeweils angeordneten Antriebszahnrades mit der jeweiligen Vorgelegewelle vorgesehen sind.

## Revendications

1. Transmission à changement de puissance (10) comportant un premier arbre d'entrée (26), un arbre de sortie (20), plusieurs arbres de renvoi (40, 72), un engrenage d'établissement de rapport (44, 76, 80) monté de façon tournante sur chaque arbre de renvoi et en relation d'entraînement constant avec le premier arbre d'entrée, des embrayages à crabots (42, 74, 84) pour relier les engrenages d'établissement de rapport avec leurs arbres de renvoi respectifs, des embrayages à friction pour changement de puissance (48, 82) servant à relier alternativement les arbres de renvoi avec l'arbre de sortie, caractérisé par un second arbre d'entrée (13), un engrenage additionnel d'établissement de rapport (46, 78) monté de façon tournante sur chaque arbre de renvoi et en relation d'entraînement constant avec le second arbre d'entrée pour établir des rapports supérieurs à ceux des rapports des engrenages entraînés par le premier arbre d'entrée, des embrayages à crabots additionnels (42, 74) pour relier les engrenages d'établissement de rapport additionnel avec leur arbre de renvoi respectif, et le premier arbre d'entrée étant entraîné par un accouplement fluidique (22) adapté pour être entraîné par un moteur, tandis que le second arbre d'entrée est adapté pour être entraîne directement par le moteur, les engrenages d'établissement de rapports inférieurs étant entraînés par l'accouplement fluidique, et les engrenages d'établissement de rapports supérieurs étant entraînés par le second arbre d'entrée agissant comme un arbre de dérivation pour l'accouplement fluidique.

2. Transmission à changement de puissance selon la revendication 1, dans laquelle la pluralité d'arbres de renvoi comprend deux arbres de renvoi (40, 72), caractérisée en que ce les engrenages d'établissement de rapports entraînés par le premier arbre d'entrée (26) sont un engrenage de marche arrière (80) et un engrenage de première (44).

3. Transmission à changement de puissance selon la revendication 2, caractérisé en ce que les engrenages d'établissement de rapports entraînés par le premier arbre d'entrée comprennent en outre un engrenage d'établissement de rapport de seconde (76) associé à l'arbre de renvoi (72) de l'engrenage d'établissement de rapport de marche arrière (80), et en ce que les engrenages d'établissement de rapports entraînés par le second arbre d'entrée (13) sont respectivement des engrenages de troisième (46) et de quatrième (78) respectivement associés aux arbres de renvoi des engrenages de premier et second rapports.

4. Transmission à changement de puissance selon la revendication 1 ou 2, caractérisé en ce que chacun des embrayages à crabots est du type synchroniseur.

5. Transmission à changement de puissance selon la revendication 1 ou 3, caractérisé en ce qu'un engrenage menant (68, 104) est monté de façon tournante sur chaque arbre de renvoi (40, 72) et en relation d'entraînement constant avec l'arbre de sortie (20), et en ce qu'un des embrayages à friction de changement de puissance est monté sur chaque arbre de renvoi, pour relier l'engrenage menant correspondant avec l'arbre de renvoi.

Fig.1.

Fig.2.

FIG. 2

FIG.4.

FIG.5.